# EUROPEAN PATENT APPLICATION

(11) **EP 4 438 570 A1**
(43) Date of publication of application: **02.10.2024**
(21) Application number: 22898239.3
(22) Date of filing: 05.10.2022
(51) Int. Cl.: C03C 10/14, C03C 21/00

(54) **INORGANIC COMPOSITION ARTICLE**

(30) Priority: 26.11.2021 JP 2021192376
(71) Applicant: Ohara, Inc., Sagamihara-shi, Kanagawa 252-5286 (JP)
(72) Inventor: YAGI, Toshitaka, Sagamihara-shi, Kanagawa 252-5286 (JP); OGASAWARA, Kohei, Sagamihara-shi, Kanagawa 252-5286 (JP); KIKKAWA, Saya, Sagamihara-shi, Kanagawa 252-5286 (JP); MORI, Ayano, Sagamihara-shi, Kanagawa 252-5286 (JP)
(74) Representative: SSM Sandmair
(86) International application number: PCT/JP2022/037302
(87) International publication number: WO 2023/095454

(57) **Abstract**

Provided is an inorganic composition article obtained by reinforcing a crystallized glass and having a compressive stress layer on the surface, the compressive stress at a depth of 30 µm from an outermost surface being 120-320 MPa, and the crystallized glass comprising, as a main crystal phase, one or more types of crystal phases selected from α-cristobalite and an α-cristobalite solid solution, wherein in mass% calculated in terms of oxides, the content of an SiO₂ component is 50.0-75.0%, the content of an Li₂O component is 3.0-10.0%, the content of an Al₂O₃ component is from 5.0% to less than 15.0%, the content of a B₂O₃ component is from greater than 0% to 10.0% or less, the content of a P₂O₅ component is from greater than 0% to 10.0% or less, and a mass ratio of SiO₂/(B₂O₃+Li₂O) is 3.0-10.0.

## Description

### FIELD OF THE DISCLOSURE

The present disclosure relates to an inorganic composition article having a compressive stress layer on a surface.

### BACKGROUND OF THE DISCLOSURE

Various types of glasses are expected to be used as cover glasses or casings to protect a display of mobile electronic devices such as a smartphone and a tablet PC, or as protectors to protect the lens of an in-vehicle optical device, as interior bezels, console panels, touch panel materials, smart keys, and the like. And these devices are required to be usable in harsh environments, and thus, there is an increasing demand for glass having higher strength.

In the related art, chemically strengthened glass is used as a material for protective members and the like. However, in the chemically strengthened glass in the related art, there are problems such as a large number of accidents in which mobile devices such as smartphones are broken when dropped. In particular, there is a need for crystallized glass that does not easily break when dropped onto a rough, uneven surface such as asphalt.

Patent Document 1 discloses a material composition of a crystallized glass substrate that can be chemically strengthened and used in an information recording medium. Patent Document 1 states that a crystallized glass based on α-cristobalite described in Patent Document 1 can be chemically strengthened and utilized as a material substrate having high strength. However, crystallized glass for information recording media, represented by hard disk substrates, is not intended to be used in harsh environments.

### [Prior Art Document]

### [Patent document]

Patent Document 1: Japanese Unexamined Patent Application Publication No. 2008-254984

### SUMMARY OF THE DISCLOSURE

An object of the present disclosure is to provide an inorganic composition article that does not easily crack when dropped onto a rough surface.

### [Solution to Problem]

The present disclosure provides the following configurations.

### (Configuration 1)

An inorganic composition article being obtained by strengthening a crystallized glass, having a compressive stress layer on a surface, and having a compressive stress of 120 MPa to 320 MPa at a depth of 30 µm from an outermost surface, and the crystallized glass including, as a main crystal phase, one or more types selected from α-cristobalite and an α-cristobalite solid solution,
in which the crystallized glass comprises, by mass% in terms of oxide,
a content of a SiO₂ component being 50.0% to 75.0%,
a content of a Li₂O component being 3.0% to 10.0%,
a content of an Al₂O₃ component being 5.0% or more and less than 15.0%,
a content of a B₂O₃ component being more than 0% and 10.0% or less,
a content of a P₂O₅ component being more than 0% and 10.0% or less, and
a mass ratio of SiO₂/(B₂O₃ + Li₂O) being from 3.0 to 10.0.

### (Configuration 2)

The inorganic composition article according to configuration 1, in which the crystallized glass comprises, by mass% in terms of oxide,
a content of a ZrO₂ component being more than 0% and 10.0% or less, and
a total content of the Al₂O₃ component and the ZrO₂ component being 10.0% or more.

### (Configuration 3)

The inorganic composition article according to configuration 1 or 2, in which the crystallized glass comprises, by mass% in terms of oxide,
a content of a K₂O component being 0% to 5.0%.

### (Configuration 4)

The inorganic composition article according to any one of configurations 1 to 3, in which the crystallized glass comprises, by mass% in terms of oxide,
a content of a Na₂O component being 0% to 4.0%,
a content of a MgO component being 0% to 4.0%,
a content of a CaO component being 0% to 4.0%,
a content of a SrO component being 0% to 4.0%,
a content of a BaO component being 0% to 5.0%,
a content of a ZnO component being 0% to 10.0%, and
a content of a Sb₂O₃ component being 0% to 3.0%.

### (Configuration 5)

The inorganic composition article according to any one of configurations 1 to 4, in which the crystallized glass comprises, by mass% in terms of oxide,
a content of a Nb₂O₅ component being 0% to 5.0%,
a content of a Ta₂O₅ component being 0% to 6.0%, and
a content of a TiO₂ component being 0% or more and less than 1.0%.

### (Configuration 6)

The inorganic composition article according to any one of configurations 1 to 5, in which a glass transition temperature (Tg) of a glass before crystallization of the crystallized glass is 610°C or lower.

According to the present disclosure, it is possible to provide an inorganic composition article that does not easily crack when dropped onto a rough surface.

Further, according to the present disclosure, by controlling the amount of Li₂O and adjusting the amount of SiO₂ and the amount of Al₂O₃, it is possible to easily and stably manufacture an inorganic composition article that does not easily crack when dropped onto a rough surface.

The "inorganic composition article" according to the present disclosure is composed of an inorganic composition material such as glass, crystallized glass, ceramics, or a composite material thereof. For example, the inorganic composition article according to the present disclosure corresponds to an article obtained, for example, by processing these inorganic materials or performing synthesis by a chemical reaction to form these inorganic materials into a desired shape. Further, the inorganic composition article also corresponds to a pressurized powder body obtained by pulverizing and then pressurizing an inorganic material, a sintered body obtained by sintering the pressurized powder body, and the like. Here, the smoothness, curvature, size, and the like of the shape of the obtained article are not limited. For example, the article may be a plate-shaped substrate, a molded body having a curvature, or a three-dimensional structure having a complicated shape.

The inorganic composition article according to the present disclosure can be used for a protective member and the like of a device by taking advantage of the features that the inorganic composition article is a glass-based material having high strength and processability. The inorganic composition article according to the present disclosure may be utilized for a cover glass or a casing of a smartphone, a member of a portable electronic device such as a tablet PC and a wearable terminal, and a protective protector, a member of a substrate for a head-up display, or the like used in a transport vehicle such as a car and an airplane. Further, the inorganic composition article according to the present disclosure may be used for other electronic devices and machinery, a building member, a member for a solar panel, a member for a projector, a cover glass (windshield) for eyeglasses and a watch, and the like.

### DETAILED DESCRIPTION OF THE EXEMPLARY EMBODIMENTS

Embodiments and examples of the inorganic composition article according to the present disclosure will be described in detail below. However, the present disclosure is not limited to the following embodiments and examples, and may be implemented by making modifications as appropriate within the scope of the object of the present disclosure.

The inorganic composition article according to the present disclosure has a compressive stress layer on a surface, and a compressive stress (CS30) of 120 MPa to 320 MPa at a depth of 30 µm from an outermost surface.

In the present disclosure, the crystallized glass includes, as a main crystal phase, one or more types selected from α-cristobalite and an α-cristobalite solid solution. A crystallized glass obtained by precipitating these crystal phases has high mechanical strength.

Here, the "main crystal phase" herein corresponds to a crystal phase having the highest content in the crystallized glass, which is determined from a peak in an X-ray diffraction pattern.

A content of each component herein is all expressed in mass% in terms of oxide, unless otherwise specified. Here, "in terms of oxide" means, assuming that all the constituent components of the crystallized glass are dissolved and converted into oxides, when a total mass of the oxides is 100 mass%, an amount of oxides in each of the components contained in the crystallized glass is expressed by mass%. As used herein, "A% to B%" represents A% or more and B% or less.

In the present disclosure, the crystallized glass comprises,
by mass% in terms of oxide,
a content of a SiO₂ component being 50.0% to 75.0%,
a content of a Li₂O component being 3.0% to 10.0%,
a content of an Al₂O₃ component being 5.0% or more and less than 15.0%,
a content of a B₂O₃ component being more than 0% and 10.0% or less,
a content of a P₂O₅ component being more than 0% and 10.0% or less, and
a mass ratio of SiO₂/(B₂O₃ + Li₂O) being from 3.0 to 10.0.

When the crystallized glass comprises the above-described main crystal phase and composition, the crystallized glass has a low glass transition temperature and the solubility of raw materials increases, and thus, the crystallized glass is easy to be manufactured, and the obtained crystallized glass can be easily processed by 3D processing and the like.

A composition range of each component included in the crystallized glass according to the present disclosure will be particularly described below.

The SiO₂ component is an essential component necessary to constitute one or more types selected from α-cristobalite and an α-cristobalite solid solution. When the content of the SiO₂ component is 75.0% or less, it is possible to suppress an excessive increase in viscosity and deterioration in solubility. When the content of the SiO₂ component is 50.0% or more, it is possible to suppress a deterioration in devitrification resistance.

An upper limit of the content of the SiO₂ component is preferably 75.0% or less, 74.0% or less, 73.0% or less, 72.0% or less, or 70.0% or less. Moreover, a lower limit of the content of the SiO₂ component is preferably 50.0% or more, 55.0% or more, 58.0% or more, or 60.0% or more.

The Li₂O component is a component that improves the meltability of the raw glass. However, when the amount of the Li₂O component is 3.0% or more, it is possible to obtain an effect of improving the meltability of the raw glass. By setting the content of the Li₂O component to 10.0% or less, the formation of lithium disilicate crystals can be prevented from increasing. Moreover, the Li₂O component is a component that contributes to chemical strengthening.

A lower limit of the content of the Li₂O component is preferably 3.0% or more, 3.5% or more, 4.0% or more, 4.5% or more, 5.0% or more, or 5.5% or more. Further, an upper limit of the content of the Li₂O component is preferably 10.0% or less, 9.0% or less, 8.5% or less, or 8.0% or less.

The Al₂O₃ component is a component suitable for improving the mechanical strength of the crystallized glass. When the content of the Al₂O₃ component is less than 15.0%, it is possible to suppress a deterioration in solubility and devitrification resistance. Further, when the content of the Al₂O₃ component is 5.0% or more, it is possible to suppress a decrease in mechanical strength.

An upper limit of the content of the Al₂O₃ component is preferably less than 15.0%, 14.5% or less, 14.0% or less, 13.5% or less, or 13.0% or less. Further, a lower limit of the content of the Al₂O₃ component may be 5.0% or more, 5.5% or more, 5.8% or more, 6.0% or more, 6.5% or more, or 8.0% or more.

The B₂O₃ component is a component suitable for lowering the glass transition temperature of the crystallized glass. However, when the amount of the B₂O₃ component is 10.0% or less, it is possible to suppress a decrease in chemical durability.

An upper limit of the content of the B₂O₃ component is preferably 10.0% or less, 8.0% or less, 7.0% or less, 5.0% or less, or 4.0% or less. A lower limit of the content of the B₂O₃ component is preferably more than 0%, 0.001% or more, 0.01% or more, 0.05% or more, 0.10% or more, or 0.30% or more.

The ZrO₂ component is a component that can improve the mechanical strength. However, when the amount of the ZrO₂ component is 10.0% or less, it is possible to suppress a deterioration in solubility.

An upper limit of the amount of the ZrO₂ component is preferably 10.0% or less, 9.0% or less, 8.5% or less, or 8.0% or less. Further, a lower limit of the amount of the ZrO₂ component may be more than 0%, 1.0% or more, 1.5% or more, or 2.0% or more.

When the sum of the contents of the SiO₂ component, the Li₂O component, the Al₂O₃ component, and the B₂O₃ component [SiO₂ + Li₂O + Al₂O₃ + B₂O₃] is large, the glass that can be easily strengthened chemically to have high strength can be obtained. Therefore, a lower limit of [SiO₂ + Li₂O + Al₂O₃ + B₂O₃] is preferably 75.0% or more, 77.0% or more, or 79.0% or more. Further, an upper limit of [SiO₂ + Li₂O + Al₂O₃ + B₂O₃] is preferably 90.0% or less, 98.0 or less, or 90.0% or less.

If the sum of the contents of the Al₂O₃ component and the ZrO₂ component [Al₂O₃ + ZrO₂] is large, the compressive stress on the surface is large when the glass is strengthened. A lower limit of [Al₂O₃ + ZrO₂] is preferably 10.0% or more, 11.0% or more, 12.0% or more, or 13.0% or more.

On the other hand, by setting [Al₂O₃ + ZrO₂] to 22.0% or less, it is possible to suppress a deterioration in solubility. Therefore, an upper limit of [Al₂O₃ + ZrO₂] is preferably 22.0% or less, 21.0% or less, 20.0% or less, or 19.0% or less.

The mass ratio SiO₂/(B₂O₃ + Li₂O) is preferably from 3.0 to 10.0. By setting this mass ratio to 3.0 to 10.0, it is possible to contribute to lowering the viscosity of the glass, so that the glass can be easily manufactured, and increase the amount of alkali ions exchanged in an ion exchange during chemical strengthening, so that an inorganic composition article having a desired CS30 can be manufactured.

Therefore, a lower limit of the mass ratio SiO₂/(B₂O₃ + Li₂O) is preferably 3.0 or more, more preferably 3.5 or more, and still more preferably 4.64 or more. Further, an upper limit of the mass ratio SiO₂/(B₂O₃ + Li₂O) is preferably 10.0 or less, more preferably 9.5 or less, and still more preferably less than 8.6.

The P₂O₅ component is an essential component added to act as a crystal nucleating agent for the glass. If the amount of the P₂O₅ component is 10.0% or less, it is possible to suppress a deterioration in devitrification resistance of the glass and phase separation of the glass.

An upper limit of the amount of the P₂O₅ component is preferably 10.0% or less, 8.0% or less, 6.0% or less, 5.0% or less, or 4.0% or less. Further, a lower limit of the amount of the P₂O₅ component may be more than 0%, 0.5% or more, 1.0% or more, or 1.5% or more.

The K₂O component is an optional component participating in chemical strengthening if contained in an amount exceeding 0%. A lower limit of the content of the K₂O component may be more than 0%, 0.1% or more, 0.3% or more, or 0.5% or more.

Further, if the content of the K₂O component is 5.0% or less, it is possible to promote crystal precipitation. Therefore, an upper limit of the content of the K₂O component may preferably be 5.0% or less, 4.0% or less, 3.5% or less, or 3.0% or less.

The Na₂O component is an optional component participating in chemical strengthening if contained in an amount exceeding 0%. If the content of the Na₂O component is 4.0% or less, a desired crystal phase can be easily obtained. An upper limit of the content of the Na₂O component is preferably 4.0% or less, 3.5% or less, more preferably 3.0% or less, and still more preferably 2.5% or less.

The MgO component, the CaO component, the SrO component, the BaO component, and the ZnO component are optional components that improve the low-temperature meltability if contained in an amount exceeding 0%, and may be contained within a range by which an effect of the present disclosure is not impaired.

Therefore, an upper limit of the content of the MgO component is preferably 4.0% or less, 3.5% or less, 3.0% or less, or 2.5% or less. Further, a lower limit of the content of the MgO component may preferably be more than 0%, 0.3% or more, or 0.4% or more.

An upper limit of the content of the CaO component is preferably 4.0% or less, 3.0% or less, 2.5% or less, or 2.0% or less. A lower limit of the content of the CaO component is preferably more than 0%, 0.01% or more, 0.02% or more, or 0.03% or more.

An upper limit of the content of the SrO component is preferably 4.0% or less, 3.0% or less, 2.5% or less, or 2.0% or less. A lower limit of the content of the SrO component is preferably more than 0%, 0.01% or more, 0.02% or more, or 0.03% or more.

An upper limit of the content of the BaO component is preferably 5.0% or less, 4.0% or less, 3.0% or less, 2.5% or less, or 2.0% or less. A lower limit of the content of the BaO component is preferably more than 0%, 0.01% or more, 0.02% or more, or 0.03% or more.

An upper limit of the content of the ZnO component is preferably 10.0% or less, 9.0% or less, 8.5% or less, 8.0% or less, or 7.5% or less. Further, a lower limit of the content of the ZnO component may preferably be more than 0%, 0.5% or more, or 1.0% or more.

The crystallized glass may or may not contain each of the Nb₂O₅ component, the Ta₂O₅ component, and the TiO₂ component, within a range by which an effect of the present disclosure is not impaired.

The Nb₂O₅ component is an optional component that improves the mechanical strength of the crystallized glass if contained in an amount exceeding 0%. An upper limit of the content of the Nb₂O₅ component may preferably be 5.0% or less, 4.0% or less, 3.5% or less, or 3.0% or less.

The Ta₂O₅ component is an optional component that improves the mechanical strength of the crystallized glass if contained in an amount exceeding 0%. An upper limit of the content of the Ta₂O₅ component may preferably be 6.0% or less, 5.5% or less, 5.0% or less, or 4.0% or less.

The TiO₂ component is an optional component that improves the chemical durability of the crystallized glass if contained in an amount exceeding 0%. An upper limit of the content of the TiO₂ component may preferably be less than 1.0%, 0.8% or less, 0.5% or less, or 0.1% or less.

Further, the crystallized glass may or may not contain each of a La₂O₃ component, a Gd₂O₃ component, a Y₂O₃ component, a WO₃ component, a TeO₂ component, and a Bi₂O₃ component, within a range by which an effect of the present disclosure is not impaired. A blending amount of each of these components may be from 0% to 2.0%, from 0% to less than 2.0%, or from 0% to 1.0%.

Furthermore, the crystallized glass may or may not contain other components not mentioned above, within a range by which the properties of the crystallized glass according to the present disclosure are not impaired. Examples of the other components include metal components such as Yb, Lu, V, Cr, Mn, Fe, Co, Ni, Cu, Ag, and Mo (including oxides of these metals).

A Sb₂O₃ component may be contained as a clarifying agent for the glass. On the other hand, when the Sb₂O₃ component is 3.0% or less, it is possible to suppress a deterioration in transmittance in a short wavelength region of the visible light region. Therefore, an upper limit of the content of the Sb₂O₃ component is preferably 3.0% or less, more preferably 2.0% or less, even more preferably 1.0% or less, and still more preferably 0.6% or less.

In addition to the Sb₂O₃ component, a SnO₂ component, a CeO₂ component, an As₂O₃ component, and one or more species selected from the group consisting of F, NOx, and SOx may or may not be contained as clarifying agents for the glass. Note that an upper limit of the content of the clarifying agent may be preferably 2.0% or less, more preferably 1.0% or less, and most preferably 0.6% or less.

On the other hand, there is a tendency to avoid the use of components including Pb, Th, Tl, Os, Be, Cl, and Se, which are considered in recent years to be harmful chemical substances, and thus, it is preferable that such components are substantially not contained.

A compressive stress CS (MPa) of the compressive stress layer of the inorganic composition article according to the present disclosure is preferably 550 MPa or more, more preferably 600 MPa or more, and even more preferably 700 MPa or more. An upper limit of the compressive stress CS is, for example, 1400 MPa or less, 1300 MPa or less, 1200 MPa or less, or 1100 MPa or less. If the compressive stress layer has such a compressive stress value, the propagation of cracks can be suppressed and the mechanical strength can be increased.

The compressive stress (CS30) at a depth of 30 µm from the outermost surface of the inorganic composition article according to the present disclosure is 120 MPa to 320 MPa, and thus, the inorganic composition article does not easily crack when dropped onto a rough surface. Therefore, the CS30 is preferably from 120 MPa to 320 MPa, more preferably from 150 MPa to 310 MPa, and even more preferably from 155 MPa to 300 MPa.

A central tensile stress CT (MPa) is an indicator of the strengthening degree of the glass by chemical strengthening. For the impact resistance of the glass, the central tensile stress CT (MPa) of the inorganic composition article according to the present disclosure is preferably 80 MPa or more, more preferably 100 MPa or more, and even more preferably 120 MPa or more. An upper limit of the central tensile stress CT is, for example, 250 MPa or less, 230 MPa or less, or 210 MPa or less. If the inorganic composition article has such a central tensile stress, a desired strengthened crystallized glass can be obtained by chemical strengthening.

In the inorganic composition article according to the present disclosure, a thickness DOLzero (µm) of the compressive stress layer depends on the thickness of the crystallized glass and thus is not limited. However, for example, if the thickness of a crystallized glass substrate is 0.7 mm, a lower limit of the thickness of the compressive stress layer may be 70 µm or more, or 100 µm or more. An upper limit of the thickness of the compressive stress layer is, for example, 180 µm or less or 160 µm or less.

In the inorganic composition article according to the present disclosure, when the crystallized glass is used as a substrate, a lower limit of the thickness of the substrate is preferably 0.05 mm or more, more preferably 0.1 mm or more, more preferably 0.2 mm or more, more preferably 0.3 mm or more, and even more preferably 0.4 mm or more. An upper limit of the thickness of the crystallized glass is preferably 2.0 mm or less, more preferably 1.5 mm or less, more preferably 1.1 mm or less, more preferably 1.0 mm or less, more preferably 0.9 mm or less, and even more preferably 0.8 mm or less.

In the present disclosure, the crystallized glass can be prepared by the following method. That is, raw materials are uniformly mixed so that each component is within a predetermined content range, and the mixed raw materials are molten and molded to manufacture raw glass. Next, this raw glass is crystallized to prepare the crystallized glass.

The Tg of the glass before crystallization of the inorganic composition article according to the present disclosure is preferably 610°C or lower, more preferably 600°C or lower, and even more preferably 590°C or lower.

A heating process for precipitating crystals may be implemented with a temperature in one stage or with temperatures in two stages.

A two-stage heating process includes a nucleation step of firstly heating the raw glass to a first temperature and a crystal growth step of heating, after the nucleation step, the glass to a second temperature higher than the first temperature in the nucleation step.

The first temperature of the two-stage heating process can be preferably from 450°C to 750°C, more preferably from 500°C to 720°C, and even more preferably from 550°C to 680°C. A holding time at the first temperature is preferably from 30 minutes to 2000 minutes, and more preferably from 180 minutes to 1440 minutes.

The second temperature in the two-stage heating process can be preferably from 550°C to 850°C, and more preferably from 600°C to 800°C. A holding time at the second temperature is preferably from 30 minutes to 600 minutes, and more preferably from 60 minutes to 400 minutes.

In the one-stage heating process, the nucleation step and the crystal growth step are performed continuously with a temperature in the one stage. Typically, the temperature is raised to a predetermined heating process temperature, is maintained for a constant period of time after reaching the predetermined heating process temperature, and is then lowered.

In the case of the one-stage heating process, the temperature in the heating process is preferably from 600°C to 800°C, and more preferably from 630°C to 770°C. Further, a holding time at the heating process temperature is preferably from 30 minutes to 500 minutes, and more preferably from 60 minutes to 400 minutes.

An example of a method of forming a compressive stress layer in an inorganic composition article includes a chemical strengthening method in which an alkaline component present in the surface layer of the crystallized glass is subjected to an exchange reaction with an alkaline component having a greater ionic radius than the alkaline component of the crystallized glass, to form a compressive stress layer on the surface layer. Further, other examples of the method include a heat strengthening method in which the crystallized glass is heated and then quenched, and an ion implantation method in which ions are implanted into the surface layer of the crystallized glass.

The inorganic composition article according to the present disclosure can be manufactured by the following chemical strengthening method, for example.

A crystallized glass is contacted to or immersed in a molten salt of a salt containing potassium and sodium, for example, a mixed salt or a complex salt of potassium nitrate (KNO₃) and sodium nitrate (NaNO₃). A process of contacting or immersing the crystallized glass to or in the molten salt may be performed in one stage or in two stages.

In the case of the two-stage process, firstly, the crystallized glass is contacted to or immersed in a mixed salt of potassium and sodium heated at 350°C to 550°C, for 1 minute to 1440 minutes, preferably 30 minutes to 500 minutes. Subsequently, secondly, the obtained product is contacted to or immersed in a potassium salt or a mixed salt of potassium and sodium heated at 350°C to 550°C, for 1 minute to 1440 minutes, preferably 60 minutes to 600 minutes.

In the case of the two-stage process, in a process at the first stage, it is desirable to use a single bath of potassium (KNO₃) or sodium (NaNO₃), and in a process at the second stage, a salt containing potassium and sodium, such as a molten salt of a mixed salt or a complex salt including potassium nitrate (KNO₃) and sodium nitrate (NaNO₃).

In the case of a one-stage chemical strengthening process, the crystallized glass is contacted to or immersed in a mixed salt containing potassium and sodium heated at 350°C to 550°C, for 1 minute to 1440 minutes, preferably 30 minutes to 500 minutes.

By performing the chemical strengthening process as described above, a compressive stress layer is formed on the surface of the glass, and the compressive stress CS at a depth of 30 µm from the outermost surface of the glass can be increased.

### [EXAMPLES]

Examples 1 to 25, Comparative Examples 1 and 2

### 1. Creation of Inorganic Composition Article

Raw materials such as oxides, hydroxides, carbonates, nitrates, fluorides, chlorides, and metaphosphate compounds corresponding to a raw material of each component of the crystallized glass were selected, and the selected raw materials were weighed and uniformly mixed to obtain the compositions described in Tables 1 to 4.

Next, the mixed raw materials were charged into a platinum crucible and melted in an electric furnace at 1300°C to 1600°C for 2 hours to 24 hours. Subsequently, the molten glass was stirred and homogenized, the temperature was lowered to 1000°C to 1450°C, and then, the molten glass was cast into a mold and slowly cooled to prepare raw glass. The obtained raw glass was heated under the crystallization conditions of the nucleation step at 600°C for 5 hours and the crystal growth step at 640°C to 700°C for 5 hours to prepare the crystallized glass.

The crystal phase of the crystallized glass was determined from an angle of a peak appearing in an X-ray diffraction pattern obtained by using an X-ray diffractometer (D8 Discover, manufactured by Bruker Corporation). In confirming the X-ray diffraction pattern, it was found that all the main peaks (the peaks having the highest intensity and the largest peak area) were located at positions corresponding to the peak pattern of α-cristobalite and/or an α-cristobalite solid solution. Therefore, it was determined that the entire main crystal phase consisted of precipitated α-cristobalite and/or α-cristobalite solid solution.

The glass transition point (Tg) of the glass before crystallization of Examples 1 to 25 was measured in conformity with the Japan Optical Glass Manufacturers' Association standard JOGIS 08-2019 "Measuring Method for Thermal Expansion of Optical Glass".

The crystallized glass prepared in Example 25 and Comparative Examples 1 and 2 was cut and ground, and then, opposing surfaces thereof were subjected to parallel polishing to obtain crystallized glass substrates having thicknesses indicated in Tables 5 to 7. Each of the crystallized glass substrates was used as a base material to obtain an inorganic composition article by the following chemical strengthening process.

That is, Examples 25-1, 25-3, and 25-5 and Comparative Examples 1 and 2 were strengthened in two stages at the temperature and time shown in Table 5, and Examples 25-2, 25-4, and 25-6 were strengthened in one stage at the temperature and time shown in Table 5. Specifically, in Example 25-1, in the first stage, the substrate was immersed in a mixed bath of KNO₃ and NaNO₃ at a weight ratio of KNO₃: NaNO₃ = 10: 1 for 163 minutes at 450°C. Subsequently, in the second stage, the substrate was immersed in a single bath of KNO₃ at 400°C for 300 minutes.

The other Examples 25-7 to 25-15 were each processed under the conditions indicated in Tables 6 and 7.

**[Table 1]**

| Examples | | | 1 | 2 | 3 | 4 | 5 | 6 | 7 | 8 |
|---|---|---|---|---|---|---|---|---|---|---|
| Composition [mass.%] | SiO₂ | | 64.36 | 64.86 | 64.20 | 64.86 | 64.20 | 64.86 | 64.86 | 64.86 |
| | Al₂O₃ | | 12.44 | 12.44 | 12.10 | 12.44 | 12.40 | 12.44 | 12.64 | 12.44 |
| | B₂O₃ | | 0.50 | 1.00 | 0.50 | 1.00 | 1.00 | 1.00 | 1.00 | 2.00 |
| | P₂O₅ | | 2.04 | 2.04 | 2.60 | 2.04 | 2.60 | 2.04 | 2.04 | 2.04 |
| | Li₂O | | 7.14 | 7.14 | 6.97 | 7.14 | 6.97 | 7.14 | 7.14 | 7.14 |
| | Na₂O | | | | | | | | | |
| | K₂O | | 1.53 | 1.53 | 1.50 | 1.53 | 1.50 | 1.53 | 1.33 | 1.53 |
| | MgO | | 1.02 | 1.02 | 1.70 | 2.02 | 0.60 | 0.52 | 1.02 | 1.02 |
| | CaO | | 0.41 | 0.41 | 0.65 | 0.41 | 0.55 | 0.91 | 0.41 | 0.41 |
| | SrO | | | | | | | | | |
| | BaO | | | | | | | | | |
| | ZnO | | 4.88 | 3.88 | 4.10 | 2.88 | 4.50 | 3.88 | 3.88 | 2.88 |
| | ZrO₂ | | 5.60 | 5.60 | 5.60 | 5.60 | 5.60 | 5.60 | 5.60 | 5.60 |
| | Nb₂O₅ | | | | | | | | | |
| | Ta₂O₅ | | | | | | | | | |
| | TiO₂ | | | | | | | | | |
| | Sb₂O₃ | | 0.08 | 0.08 | 0.08 | 0.08 | 0.08 | 0.08 | 0.08 | 0.08 |
| | Total | | 100.00 | 100.00 | 100.00 | 100.00 | 100.00 | 100.00 | 100.00 | 100.00 |
| | SiO₂ + Li₂O + Al₂O₃ + B₂O₃ | | 84.44 | 85.44 | 83.77 | 85.44 | 84.57 | 85.44 | 85.64 | 86.44 |
| | SiO₂/(B₂O₃ + Li₂O) | | 8.42 | 7.97 | 8.59 | 7.97 | 8.06 | 7.97 | 7.97 | 7.10 |
| | Al₂O₃ + ZrO₂ | | 18.04 | 18.04 | 17.70 | 18.04 | 18.00 | 18.04 | 18.24 | 18.04 |
| Crystallization conditions | Nucleation | Tempera ture [°C] | 600 | 600 | 600 | 600 | 600 | 600 | 600 | 600 |
| | | Holding time [h] | 5 | 5 | 5 | 5 | 5 | 5 | 5 | 5 |
| | Crystal growth | Tempera ture [°C] | 700 | 680 | 660 | 660 | 700 | 660 | 660 | 660 |
| | | Holding time [h] | 5 | 5 | 5 | 5 | 5 | 5 | 5 | 5 |
| Tg [°C] | | | 600 | 589 | 592 | 577 | 595 | 592 | 593 | 576 |

**[Table 2]**

| Examples | | | 9 | 10 | 11 | 12 | 13 | 14 | 15 | 16 |
|---|---|---|---|---|---|---|---|---|---|---|
| Composition [mass.%] | SiO₂ | | 64.86 | 64.86 | 64.86 | 64.86 | 64.86 | 60.00 | 71.42 | 67.20 |
| | Al₂O₃ | | 12.44 | 12.44 | 12.74 | 12.44 | 12.44 | 12.10 | 5.70 | 5.60 |
| | B₂O₃ | | 3.00 | 2.00 | 2.00 | 2.00 | 2.00 | 3.00 | 2.00 | 1.15 |
| | P₂O₅ | | 2.04 | 2.04 | 2.04 | 2.04 | 2.04 | 3.80 | 2.30 | 2.60 |
| | Li₂O | | 7.14 | 7.14 | 7.14 | 7.64 | 7.14 | 6.97 | 7.50 | 5.97 |
| | Na₂O | | | | | | | 1.00 | | 2.00 |
| | K₂O | | 1.53 | 1.53 | 1.23 | 1.03 | 1.53 | 0.50 | 1.50 | 1.50 |
| | MgO | | 1.02 | 0.52 | 1.02 | 1.02 | 1.02 | 1.10 | 0.50 | 2.20 |
| | CaO | | 0.41 | 0.41 | 0.41 | 0.41 | | | | |
| | SrO | | | | | | | | | |
| | BaO | | | | | | | 1.25 | | |
| | ZnO | | 1.88 | 3.38 | 2.88 | 2.88 | 2.88 | 4.60 | 3.50 | 5.10 |
| | ZrO₂ | | 5.60 | 5.60 | 5.60 | 5.60 | 6.01 | 5.60 | 5.50 | 5.60 |
| | Nb₂O₅ | | | | | | | | | |
| | Ta₂O₅ | | | | | | | | | |
| | TiO₂ | | | | | | | | | |
| | Sb₂O₃ | | 0.08 | 0.08 | 0.08 | 0.08 | 0.08 | 0.08 | 0.08 | 1.08 |
| | Total | | 100.00 | 100.00 | 100.00 | 100.00 | 100.00 | 100.00 | 100.00 | 100.00 |
| | SiO₂ + Li₂O + Al₂O₃ + B₂O₃ | | 87.44 | 86.44 | 86.74 | 86.94 | 86.44 | 82.07 | 86.62 | 79.92 |
| | SiO₂/(B₂O₃ + Li₂O) | | 6.40 | 7.10 | 7.10 | 6.73 | 7.10 | 6.02 | 7.52 | 9.44 |
| | Al₂O₃ + ZrO₂ | | 18.04 | 18.04 | 18.34 | 18.04 | 18.45 | 17.70 | 11.20 | 11.20 |
| Crystallization conditions | Nucleation | Temperature [°C] | 600 | 600 | 600 | 600 | 600 | 600 | 600 | 600 |
| | | Holding time [h] | 5 | 5 | 5 | 5 | 5 | 5 | 5 | 5 |
| | Crystal growth | Temperature [°C] | 660 | 680 | 660 | 660 | 700 | 680 | 680 | 670 |
| | | Holding time [h] | 5 | 5 | 5 | 5 | 5 | 5 | 5 | 5 |
| Tg [°C] | | | 561 | 573 | 577 | 570 | 575 | 586 | | 574 |

**[Table 3]**

| Examples | | | 17 | 18 | 19 | 20 | 21 | 22 | 23 | 24 |
|---|---|---|---|---|---|---|---|---|---|---|
| Composition [mass.%] | SiO₂ | | 65.68 | 64.20 | 65.86 | 64.86 | 66.36 | 64.86 | 65.81 | 65.81 |
| | Al₂O₃ | | 9.44 | 10.10 | 6.24 | 12.74 | 12.74 | 10.74 | 10.72 | 10.72 |
| | B₂O₃ | | 7.00 | 1.50 | 4.00 | 3.00 | 2.00 | 2.00 | 2.00 | 2.00 |
| | P₂O₅ | | 2.04 | 4.85 | 2.25 | 2.04 | 2.54 | 2.04 | 2.14 | 2.14 |
| | Li₂O | | 7.14 | 6.97 | 8.14 | 7.14 | 7.14 | 7.14 | 7.13 | 7.13 |
| | Na₂O | | | | | | | | 0.50 | 0.50 |
| | K₂O | | 1.53 | 1.50 | 1.73 | | 2.23 | 1.23 | 0.73 | 0.73 |
| | MgO | | 0.41 | 1.10 | 1.02 | 2.02 | 1.02 | 1.02 | 1.02 | 1.02 |
| | CaO | | | 1.00 | | 0.41 | 0.41 | 0.41 | 0.41 | |
| | SrO | | | | | | | | | |
| | BaO | | | | | | | | | |
| | ZnO | | 1.08 | 3.10 | 2.88 | 3.11 | 2.88 | 1.88 | 2.88 | 2.88 |
| | ZrO₂ | | 5.60 | 5.00 | 7.60 | 4.60 | 2.30 | 8.68 | 5.60 | 5.60 |
| | Nb₂O₅ | | | | | | | | 1.00 | |
| | Ta₂O₅ | | | | | | | | | 1.41 |
| | TiO₂ | | | | | | | | | |
| | Sb₂O₃ | | 0.08 | 0.68 | 0.28 | 0.08 | 0.38 | | 0.06 | 0.06 |
| | Total | | 100.00 | 100.00 | 100.00 | 100.00 | 100.00 | 100.00 | 100.00 | 100.00 |
| | SiO₂ + Li₂O + Al₂O₃ + B₂O₃ | | 89.26 | 82.77 | 84.24 | 87.74 | 88.24 | 84.74 | 85.66 | 85.66 |
| | SiO₂/(B₂O₃ + Li₂O) | | 4.64 | 7.58 | 5.43 | 6.40 | 7.26 | 7.10 | 7.21 | 7.21 |
| | Al₂O₃+ZrO₂ | | 15.04 | 15.10 | 13.84 | 17.34 | 15.04 | 19.42 | 16.32 | 16.32 |
| Crystallization conditions | Nucleation | Temperature [°C] | 600 | 600 | 600 | 600 | 600 | 600 | 600 | 600 |
| | | Holding time [h] | 5 | 5 | 5 | 5 | 5 | 5 | 5 | 5 |
| | Crystal growth | Temperature [°C] | 640 | 670 | 640 | 640 | 660 | 680 | 660 | 660 |
| | | Holding time [h] | 5 | 5 | 5 | 5 | 5 | 5 | 5 | 5 |
| Tg [°C] | | | 536 | 580 | 545 | 541 | 569 | 531 | 572 | 578 |

**[Table 4]**

| Examples | | | 25 | Comparative Example 1 | Comparative Example 2 |
|---|---|---|---|---|---|
| Composition [mass.%] | SiO₂ | | 64.81 | 55.56 | 65.66 |
| | Al₂O₃ | | 12.72 | 18.26 | 12.44 |
| | B₂O₃ | | 2.00 | | |
| | P₂O₅ | | 2.14 | | 2.04 |
| | Li₂O | | 7.13 | 1.30 | 7.14 |
| | Na₂O | | 0.50 | 9.86 | |
| | K₂O | | 0.73 | 1.92 | 1.53 |
| | MgO | | 1.02 | 7.96 | 1.02 |
| | CaO | | 0.41 | 0.85 | 0.41 |
| | SrO | | | | |
| | BaO | | | | |
| | ZnO | | 2.88 | | 4.08 |
| | ZrO₂ | | 5.60 | | 5.60 |
| | Nb₂O₅ | | | | |
| | Ta₂O₅ | | | | |
| | TiO₂ | | | 4.19 | |
| | Sb₂O₃ | | 0.06 | 0.10 | 0.08 |
| | Total | | 100.00 | 100.00 | 100.00 |
| | SiO₂ + Li₂O + Al₂O₃ + B₂O₃ | | 86.66 | 75.12 | 85.24 |
| | SiO₂/(B₂O₃ + Li₂O) | | 7.10 | 42.74 | 9.20 |
| | Al₂O₃ + ZrO₂ | | 18.32 | 18.26 | 18.04 |
| Crystallization conditions | Nucleation | Temperature [°C] | 600 | - | 600 |
| | | Holding time [h] | 5 | - | 5 |
| | Crystal growth | Temperature [°C] | 660 | 655 | 700 |
| | | Holding time [h] | 5 | 5 | 5 |
| Tg [°C] | | | 579 | 599 | 616 |

### 2. Evaluation of Inorganic Composition Article

The following properties of the obtained inorganic composition article were measured and a drop test was performed. The results are shown in Tables 5 to 7.

### (1) Stress Measurement

The compressive stress (CS) of the outermost surface was measured by using a glass surface stress meter FSM-6000LE manufactured by Orihara Manufacturing Co., LTD., and a light source having a wavelength of 365 nm was used as a light source of the measurement device.

Further, the compressive stress (CS30) at a depth of 30 µm from the outermost surface was measured by using a scattered light photoelastic stress meter SLP-1000 (manufactured by Orihara Manufacturing Co., LTD.), and light sources having wavelengths of 405 nm and 518 nm were used as the light source of the measurement device.

Values of the refractive index at 365 nm, 405 nm, and 518 nm were used for the refractive index used for the CS and CS30 measurements. Note that the values of the refractive index were calculated by using a quadratic approximation expression from the measurement values of the refractive index at the wavelengths of a C-line, a d-line, an F-line, and a g-line in conformity with the V-block method specified in JIS B 7071-2: 2018.

The values of the photoelastic constants at 365 nm, 405 nm, and 518 nm were used as the photoelastic constants used in the CS and CS30 measurements. Note that the photoelastic constant can be calculated by using a quadratic approximation expression from the measurement values of the photoelastic constant at a wavelength of 435.8 nm, a wavelength of 546.1 nm, and a wavelength of 643.9 nm. In the Examples, representative values used as the photoelastic constant were 31.3 at 365 nm, 31.0 at 405 nm, and 30.1 at 518 nm.

The photoelastic constant (β) was determined by polishing opposing surfaces of a sample shape to form a disc shape having a diameter of 25 mm and a thickness of 8 mm, applying a compressive load in a predetermined direction, measuring an optical path difference occurring at the center of the glass, and using the relational expression δ = β * d * F. In this relational expression, the optical path difference is expressed as δ (nm), the thickness of the glass as d (mm), and the stress as F (MPa).

The depth DOLzero (µm) and the central tensile stress (CT) when the compressive stress of the compressive stress layer was 0 MPa were measured by using a scattered light photoelastic stress meter SLP-1000 (manufactured by Orihara Manufacturing Co., LTD.). Light sources having wavelengths of 405 nm and 518 nm were used as the measurement light sources.

The values of the refractive index at wavelengths of 405 nm and 518 nm were calculated by using a quadratic approximation expression from the measurement values of the refractive index at the wavelengths of the C-line, the d-line, the F-line, and the g-line in conformity with the V-block method specified in JIS B 7071-2: 2018.

The photoelastic constants at wavelengths of 405 nm and 518 nm used for the DOLzero and CT measurements can be calculated by using a quadratic approximation expression from the measurement values of the photoelastic constant at a wavelength of 435.8 nm, a wavelength of 546.1 nm, and a wavelength of 643.9 nm. In the Examples, representative values used as the photoelastic constant were 31.0 at 405 nm and 30.1 at 518 nm. The photoelastic constant is determined as described above.

### (2) Substrate Drop Test

A drop test using sandpaper was performed by the method described below. The drop test simulates dropping onto asphalt.

As a drop test sample, a glass substrate having the same dimensions (length x width) as the inorganic composition article (length 156 mm x width 71 mm) was attached to the inorganic composition article to form a drop test sample. The thickness of the glass substrate was adjusted so that the weight of all drop test samples was 46 g, and if necessary, a freely selected material that did not affect the strength of the test samples was attached to the test sample to finely adjust the thickness. In Tables 5 to 7, "article thickness" refers to the thickness of the inorganic composition article. Sandpaper having a roughness of #80 was placed on a stainless steel base, and the drop test sample described above was dropped onto the base from a height of 20 cm from the base with the inorganic composition article facing down. After dropping the drop test sample, if the inorganic composition article did not crack, the height was increased by 5 cm, and the drop test was repeated at an increased height until the inorganic composition article cracked. The test was performed three times (n1 to n3), and the average height at which the inorganic composition article cracked in nl to n3 was calculated.

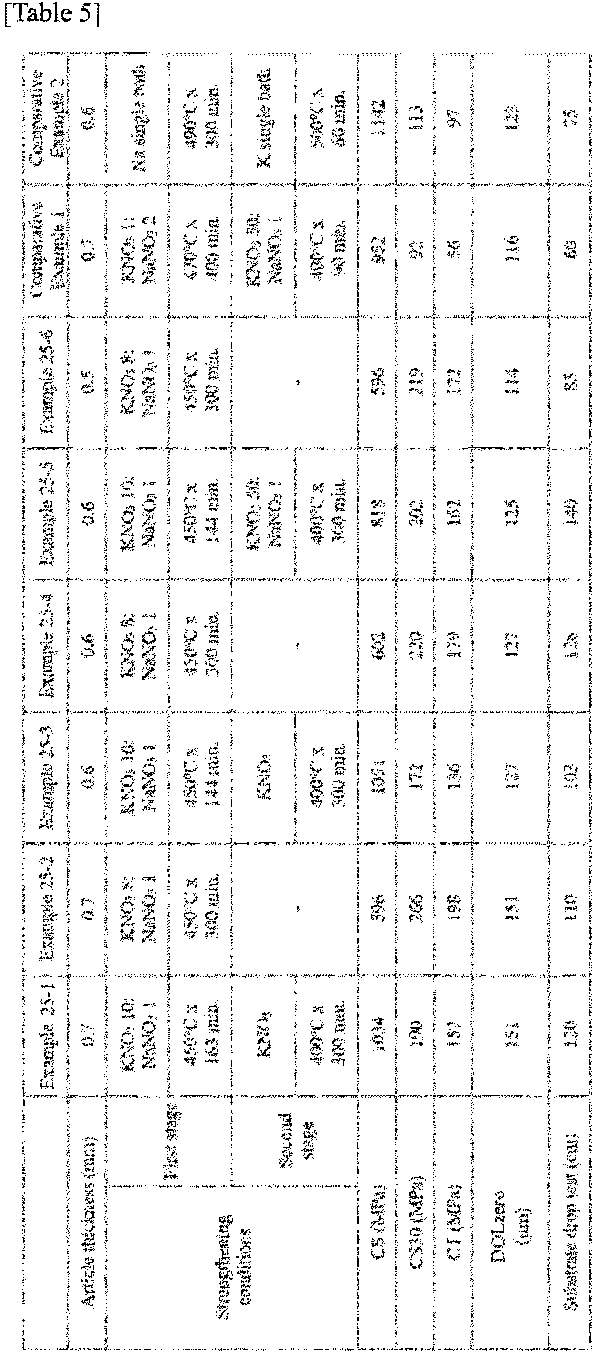

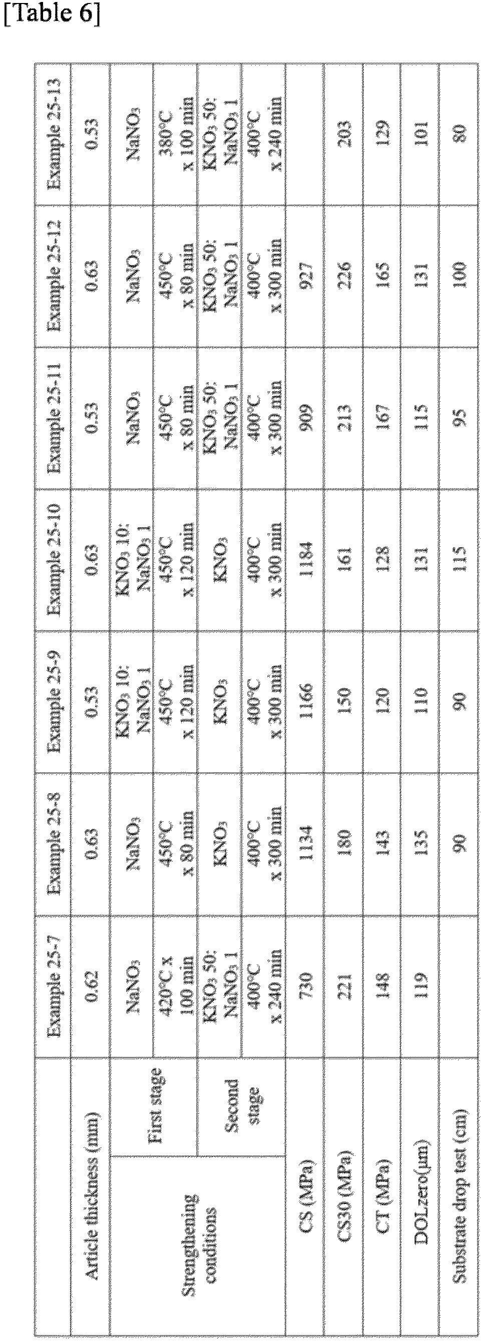

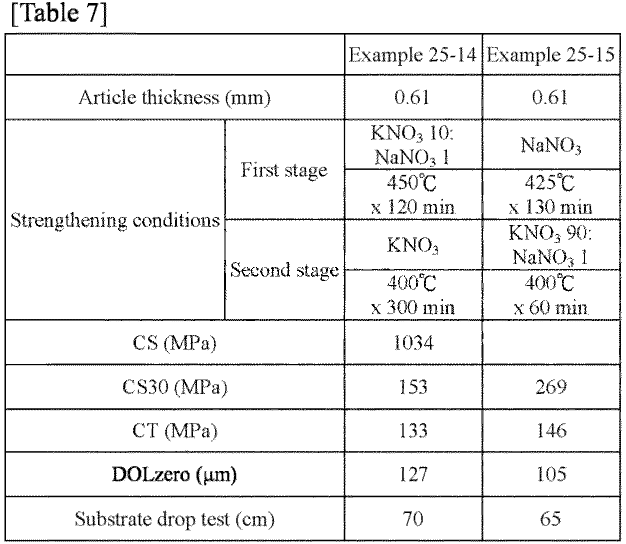

## Claims

1. An inorganic composition article being obtained by strengthening a crystallized glass, having a compressive stress layer on a surface, and having a compressive stress of 120 MPa to 320 MPa at a depth of 30 µm from an outermost surface, and the crystallized glass including, as a main crystal phase, one or more types selected from α-cristobalite and an α-cristobalite solid solution,
in which the crystallized glass comprises, by mass% in terms of oxide,
a content of a SiO₂ component being 50.0% to 75.0%,
a content of a Li₂O component being 3.0% to 10.0%,
a content of an Al₂O₃ component being 5.0% or more and less than 15.0%,
a content of a B₂O₃ component being more than 0% and 10.0% or less,
a content of a P₂O₅ component being more than 0% and 10.0% or less, and
a mass ratio of SiO₂/(B₂O₃ + Li₂O) being from 3.0 to 10.0.

2. The inorganic composition article according to claim 1, wherein the crystallized glass comprises, by mass% in terms of oxide,
a content of a ZrO₂ component being more than 0% and 10.0% or less, and
a total content of the Al₂O₃ component and the ZrO₂ component being 10.0% or more.

3. The inorganic composition article according to claim 1 or 2, wherein the crystallized glass comprises, by mass% in terms of oxide,
a content of a K₂O component being 0% to 5.0%.

4. The inorganic composition article according to claim 1 or 2, wherein the crystallized glass comprises, by mass% in terms of oxide,
a content of a Na₂O component being 0% to 4.0%,
a content of a MgO component being 0% to 4.0%,
a content of a CaO component being 0% to 4.0%,
a content of a SrO component being 0% to 4.0%,
a content of a BaO component being 0% to 5.0%,
a content of a ZnO component being 0% to 10.0%, and
a content of a Sb₂O₃ component being 0% to 3.0%.

5. The inorganic composition article according to claim 1 or 2, wherein the crystallized glass comprises, by mass% in terms of oxide,
a content of a Nb₂O₅ component being 0% to 5.0%,
a content of a Ta₂O₅ component being 0% to 6.0%, and
a content of a TiO₂ component being 0% or more and less than 1.0%.

6. The inorganic composition article according to claim 1 or 2, wherein a glass transition temperature (Tg) of a glass before crystallization of the crystallized glass is 610°C or lower.
